# EUROPEAN PATENT SPECIFICATION

(11) **EP 1 494 528 B1**
(45) Date of publication and mention of the grant of the patent: **18.10.2006**
(21) Application number: 02726413.4
(22) Date of filing: 17.04.2002
(51) Int. Cl.: A01N 25/02

(54) **USE OF VEGETABLE OIL AS AN ADJUVANT FOR SUBSTANCES HAVING A FUNGICIDE, BACTERICIDE, INSECTICIDE AND HERBICIDE ACTIVITY**
BENUTZUNG VON PFLANZLICHEM ÖL ALS ADJUVANTIEN FÜR FUNGIZIDE, BAKTERIZIDE, INSEKTIZIDE ODER HERBIZIDE SUBSTANZEN
UTILISATION D'HUILES VEGETALES EN TANT QU'ADJUVANTS DE SUBSTANCES AYANT UNE ACTIVITE FONGICIDE, BACTERICIDE, INSECTICIDE ET HERBICIDE

(43) Date of publication of application: 12.01.2005
(60) Divisional application: 04028425.9
(73) Proprietor: Agribiotec s.r.l., 26100 Cremona (IT); Societa Italiana Werisan di Legnani Cav. Rag. Antonio s.p.a., 42017 Novellara (IT)
(72) Inventor: LAMERI, Paolo c/o LAMERI S.P.A., I-26100 Cremona (IT)
(74) Representative: Ponzellini, Gianmarco
(86) International application number: PCT/IT2002/000248
(87) International publication number: WO 2003/086073

(56) References cited:
- WO-A-99/03342
- DE-A- 1 542 682
- DATABASE WPI Section Ch, Week 198442 Derwent Publications Ltd., London, GB; Class C03, AN 1984-259496 XP002222294 & JP 59 157008 A (SUMITOMO CHEM CO LTD), 6 September 1984 (1984-09-06)
- GRAYSON, B. TERENCE ET AL: "Effect of adjuvants on the therapeutic activity of dimethomorph in controlling vine downy mildew. I. Survey of adjuvant types" PESTICIDE SCIENCE (1996), 46(3), 199-206, XP000591650
- BANKS V E ET AL: "INFLUENCE OF SOYBEAN OIL CARRIER AND METHOD OF APPLICATION ON WEED CONTROL IN SOYBEANS GLYCINE-MAX" WEED SCIENCE, vol. 36, no. 4, 1988, pages 504-509, XP009000920 ISSN: 0043-1745

## Description

### Field of the Invention

The present invention relates to use of soybean oil, as an adjuvant for substances having a fungicide activity in preventive and curative treatments of plant diseases. In addition, the present invention pertains to a composition comprising a soybean oil as an adjuvant, in combination with at least another active substance which may be a fungicide selected from common fungicides, as well as to use of the composition itself in preventive and curative treatments of plant diseases in cultivations.

### Prior Art

Known on the market is the presence of a great number of substances and compositions that are used for control of diseases caused by fungi in agricultural cultivations, in particular in the vine, vegetable and fruit-growing field.

Substantially, most of the substances and compositions having a fungicide activity are synthesis substances. These categories of synthetic substances show a systemic, contact, cytotropic, translaminar and mesostemic activity for control of diseases caused by fungi.

As an alternative to synthesis products, there are also substances and compositions having a fungicide and bactericide activity of natural origin such as sulphur and copper, the latter in the form of sulphate, chloride and hydroxide, for example.

The above mentioned substances, whether they are of natural origin or obtained by synthesis, have several different limits: toxicology, residues, undesirable side effects, which limits however must all adapt themselves to the necessity of use in agricultural treatments for the purpose of keeping the treatments themselves efficient. Use of innovative products that may improve fruit healthiness and reduce or eliminate residues from the plant protection products is a widespread practice adopted in drawing up the regional disciplinary measures and by the firms belonging to the great distribution chains (chains of supermarkets). Often in these disciplinary measures use of synthesis products is combined with biological preparations in integrated productions, whereas the sector of biological productions is increasingly growing due both to market requirements and to the improved quality of the productions resulting from the new active ingredients. Recently, alongside the integrated and biological productions, there is a development of the industrial chain concept with the necessity of tracing the whole production system with a preference for plant protection products having a low environmental impact.

As a result, not only plant protection products are used, whenever possible, to a low amount, but they must also have a low environmental impact and a favourable toxicological profile (in the production disciplinary measures for the integrated defence, the plant protection products belonging to toxicological classes of the very toxic and toxic type are no longer inserted, if possible, and those of the irritant and non-classified type are favoured) and must be of the type easily degradable in the soil.

It is to be added that treatments even in high amounts take place with great frequency and often promote phenomena of phytotoxicity on leaves and fruits that impair the production quality. In addition, accumulation of undesired residues in fruits and soils promotes formation of strains resisting to that chemical molecule of which great use was made.

Copper as a substance of natural origin either in the form of a sulphate, an oxychloride or a hydroxide, is an active ingredient widely used both in conventional agriculture and in biological agriculture even if the limits of this active ingredient are well known, due to the natural phytotoxicity or inhibition (for more enduring cultivations) that it causes on the treated parts. Copper in all its forms and in the cases of greater sensitiveness, causes burns and necrosis on leaves and fruits restraining the production capacity of the cultivations and in addition it reduces the commercial value of the productions. It is known that in the field of vine-growing copper application adversely affects the production and quality capacity in terms of sugary degree and aromatic potential.

It is known that copper is a heavy metal accumulating in the soils without degrading and inhibiting the terricolous microflora or, in the worst cases, also causing intoxications to cultivations on soils that received great amounts of copper such as vine-cultivated soils. Another adverse feature typical of copper, since it is not perishable, is the high residue contained in the cultivation waste (grape stalks after wine-pressing, for example) classifying potential amending products or organic fertilizers at the same level as toxic refuse requiring precise and severe regulations for disposal.

Exactly for the above reasons, connected with the chemical nature of copper, the European Community fixed the limit of metal copper to be spread for each hectare in one year to 8 kg of active ingredient (p.a.) year/hectare. For next years a lower limit corresponding to 6 kg of p.a. per year/hectare was established.

Generally, it is known that all substances for plant protection can cause various toxicity degrees, as a side effect, towards the human beings, animals and environment.

Due to toxicology of some active ingredients of synthesis plant protection products such as fungicides, application of same to low amounts is desirable in order to be able to ensure the agricultural operator's and consumers' health.

Other drawbacks imposing use of fungicide, substances to limited and controlled concentrations are to be found in problems resulting from accumulation in the soil and strata, poor selectivity of some plant protection products that can cause damages to cultivations, interference of these compositions with useful insects naturally populating orchards, vines and vegetable-cultivated fields. In addition, for bactericide, fungicide, insecticide synthesis plant protection products, there is the concrete possibility that bacterial, fungicide and insect strains resisting to treatments may be selected. Alternatively, for herbicide plant protection products there is the possibility of selecting some weeds that are less sensitive or even resistant to the herbicides employed.

From the above it appears that fungicide products are not always fully efficient and harmless or safe to humans and environment; it is therefore essential that new substances should be sought for and set up.

In addition, there is on the market a series of compounds, called adjuvants, that are employed in combination with the substances having a fungicide, bactericide, insecticide and herbicide activity in plant treatments. The employed adjuvant, in combination with the fungicide, bactericide, insecticide and herbicide active ingredient is able to improve efficiency of the active ingredient itself while reducing amount of same. Reduction in the used amounts of the fungicide, bactericide, insecticide and herbicide active ingredient involves a reduction in the costs of the individual treatments and, in addition, also involves a reduction in the above mentioned risks.

However, the adjuvant must be a substance having a very reduced toxicity value. The adjuvant must be a substance that must not give rise to phytotoxicity phenomena to the plants. In addition, the adjuvant must be a substance having no contraindications both for the plants but also, and above all, for the health of the operators that must handle these substances.

DE-A-1542682 describes the use of oils such as vegetable oils or plant-compatible mineral oils as adjuvants for agrochemicals such as fungicides and insecticides. The examples show the use of adjuvant mixtures containing linseed oil or sunflower oil with the fungicide copper oxychloride.

Weed Science, Vol.36(4), 1988, pp 504-509 describes the application of herbicides in various formulations containing soybean oil, either as ULV sprays or as water emulsions, to soybean cultivation. The emulsions contain 10% soybean oil, and additionally an emulsifier.

JP-A-59157008 describes fungicide compositions containing extracts of Cassia pods or seeds, using as carriers eg. soybean oil.

WO-A-9903342 describes vegetable oils such as rape oil in more complex adjuvant compositions for pesticides, wherein a large proportion of the oil is reacted with wax esters.

Pesticide Science, Vol.46(3), 1996, pp 199-206 describes studies on the effects of rapeseed oil in emulsions of the fungicide dimethomorph used against downy mildew in vines. Emulsifiable concentrates containing the adjuvant are emulsified in tap water before mixing with the fungicide. The oil/water emulsion contains 1.2% oil.

Therefore, there is still a need for an adjuvant substance and/or a composition comprising said adjuvant substance capable of reducing the amounts of use of the fungicide active ingredients.

In addition, there is still a need for an adjuvant substance and/or a composition comprising said adjuvant substance capable of improving the control activity of fungi in the preventive and/or curative treatments of the agricultural cultivations, in particular in the vine, vegetable and fruit-growing field.

In particular, there is a need for an adjuvant substance and/or a composition comprising said adjuvant substance having a limited toxicity and capable of restricting all problems connected with accumulation of pollutants in the soil.

### DESCRIPTION OF THE INVENTION

The technical problem at the base of the present invention was that of selecting an adjuvant substance capable of overcoming the limits and drawbacks of the known art.

This problem was solved by the Applicant that surprisingly found it useful to use a soybean oil as the adjuvant substance.

In particular, water emulsions comprising a soybean oil find a valid use as coadjuvants in the preventive and/or curative treatments of many diseases damaging and devastating the agricultural cultivations, in particular in the vine, vegetable and fruit-growing field.

In addition, a water emulsion comprising a soybean oil in combination with active ingredients having a fungicide, bactericide, insecticide and herbicide activity find a valid use as adjuvants in the preventive and/or curative treatments of many diseases damaging and devastating the agricultural cultivations, in particular in the vine, vegetable and fruit-growing field.

Finally, the Applicant has found that water emulsions comprising a vegetable oil in combination with other substances having a fungicide activity enable the amounts of use of the active ingredient in terms of concentration to be reduced, with good results.

It is a first object of the present invention to provide use of a soybean oil as an adjuvant for the substances having a fungicide activity for the preventive and/or curative treatment of diseases caused by fungi on agricultural cultivations.

It is another object of the present invention to provide a fungicide composition comprising a water emulsion of a soybean oil in combination with at least another substance having a fungicide, bactericide, insecticide and herbicide activity selected from the group consisting of fungicides, bactericides, insecticides and herbicides.

It is a further object of the present invention to provide use of said fungicide composition comprising a water emulsion of a vegetable oil in combination with at least another substance having a fungicide, bactericide and insecticide activity selected from the group consisting of fungicides, bactericides and insecticides in the preventive and/or curative treatments of plant diseases and from the group consisting of herbicides in the treatments for weed control in the vine, vegetable and fruit-growing field.

Other preferred embodiments are described in the accompanying sub-claims.

Further technical features and advantages of the invention will become more apparent from the following detailed description.

The Applicant has found it useful to use a soybean oil as the adjuvant for substances having a fungicide activity in the preventive and/or curative treatments of plant diseases caused by fungi.

Preferably, fungus selection is made from the group comprising: *pythiaceae* family (e.g. *Phythium spp., Phytophtora spp.*), *peronosporaceae* family (e.g. *Peronospora spp., Bremia spp.*), *erysiphaceae* family (e.g. *Uncinula necator*), *helotiaceae* family (e.g. *Sclerotinia spp.*), *pseudospharialaceae* family (e.g. *Venturia inequalis*), *moniliaceae* family (e.g. *Cercospora spp., Alternaria spp., Thielaviopsis spp., Cladosporium spp, Botritis spp., Monilia spp., Verticillium spp.*).

Preferably, plants submitted to preventive or curative treatment are selected from the group comprising: horticultural cultivations (such as tomato, potato, lettuce, strawberry, onion, celery, melon, marrow, aubergine, artichoke, French bean, cabbage), flower and ornamental cultivations (such as rhododendron, begonia, camellia, chrysantemum, carnation, stork's bill, gerbera, lilium, orchid, petunia, primula, rose), arboreous cultivations (such as dicotyledon, citrus, cherry, fig, almond, apple, walnut, olive, pear, peach, plum trees, vine, flower and ornamental trees, nurseries).

The water emulsion comprising a soybean oil, is a stable emulsion. The emulsion comprises water in an amount included between 15 and 85% by weight or volume, with respect to the weight or volume of the emulsion, and vegetable oil in an amount included between 85 and 15% by weight or volume, with respect to the emulsion weight or volume.

The physical, chemical and technical properties of the water emulsion comprising a soybean oil, which is the object of the present invention, are: the absence of oxidizing properties; flash point higher than 300°C; pH (1% emulsion of soybean oil in water) 7.5; viscosity value at 25°C, 425 cps; specific gravity value at 20°C, 1 g/ml. The water emulsion object of the invention under normal environmental conditions is stable in time and keeps its features unchanged. The emulsion kept for 14 days to a temperature of 54°C did not suffer from important physico-chemical changes. At its maximum use amount, the emulsion of the invention does not show foam. Hereinbelow reproduced are tests for the emulsion emulsifiability, new emulsifiability and stability:

| Emulsifiability | Full and uniform |
|---|---|
| Emulsion stability | - after 30 minutes, 3 ml of oil on the surface |
| | - after 3 hours, 5 ml of oil on the surface |
| | - after 24 hours, 5 ml of oil on the surface |
| New emulsifiability | Full |
| | - after 30 seconds: 1 ml of oil on the surface |
| | - after 30 minutes: 3 ml of oil on the surface |

The Applicant has found it useful to prepare a fungicide, bactericide, insecticide and herbicide composition comprising a stable water emulsion of a soybean oil, in combination with at least one substance having a fungicide activity. In particular, the composition may comprise at least one substance selected from the group comprising fungicides.

For instance, fungicides are selected from the following compounds:
1. Organic nitrogen-sulphur compounds such as:
   - dithiocarbamates, (ziram, mancozeb), for example;
   - thiazines:

   - thiadizoles;
   - thioanilides (e.g. etridiazole);
   - thiocyanoquinones;
   - thiophanates
   - thiophthalimides (e.g. folpet).
2. Organic nitrogen compounds such as:
   - organic aromatic-aliphatic nitrogen compounds (e.g. cymoxanil, benalaxyl, metalaxyl, chlorothalonil);
   - organic heterocyclic nitrogen compounds (e.g. procymidone, fludioxonil, cyprodinil; bitertanol, tetraconazole, triadimenol, dimethomorph);
3. Halohydrocarbons.
4. Analogues of strobilurines (e.g. azoxystrobin; trifloxystrobin);
5. Organic phosphorus compounds (e.g. fosetyl-aluminium)
6. Organic stannous compounds.
7. Inorganic compounds such as:
   - sulphur and compounts thereof (e.g. sulphur).

For instance, insecticides are selected from the following compounds:
1. Organic nitrogen compounds such as:
   - carbamates (e.g. carbaryl, pirimicarb);
   - benzoylureas (e.g. flufenoxuron);
   - chloronicotiniles (e.g. imidacloprid);
   - dyacylhydrazines
   - phenylpyrazoles (e.g. fipronil);
   - pyridine azometines
   - triazines
2. Organic nitrogen-sulphur compounds, such as:
   - dithiocarbamates (e.g. metam-sodium);
   - thiadiazines;
   - thiadiazinons (e.g. buprofezin);
   - thiocarbamates.
3. Organic chlorine compounds, such as:
   - cyclohexanes;
   - cycloheptanes (e.g. endosulfan);
   - diphenylethanes
4. Organic phosphorus compounds, such as:
   - phosphates (e.g. vamidothion, chlorpyrifos-methyl, azinphos-methyl, dimethoate, phosalone);
   - phosphonates;
   - phosphoroamidates;
   - diphosphates.
5. Halohydrocarbons
6. Phenoxy-derivatives.
7. Insecticide oils, such as:
   - mineral oils;
   - yellow oils;
8. Vegetable derivatives and similar synthetic compounds, such as:
   - flints
   - pyrethroids;
   - norpyrethrates (e.g. deltamethring, tefluthrin, acrinathrin and other vegetable derivatives (e.g. azadirachtin, rotenone);
9. Inorganic compounds such as:
   - polysulphides (e.g. barium polysulphide);
   - phosphorous-derivatives

For instance, acaricides are selected from the following compounds:
1. Halohydrocarbons (e.g. dicofol);
2. Organic sulphur compounds (e.g. propargite);
3. Organic nitrogen compounds (e.g. amitraz, tebufenpyrad);
4. Organic nitrogen-sulphur compounds (e.g. hexythiazox);
5. Organic stannous compounds

For instance, nematocides are selected from the following compounds:
1. Halohydrocarbons;
2. Organic nitrogen compounds (e.g. carbosulfan);
3. Organic nitrogen-sulphur compounds (e.g. phorate).

For instance, weedkillers are selected from the following compounds:
1. Organic nitrogen compounds, such as:
   - amides (e.g. propyzamide, metolachlor, flufenacet);
   - benzonitriles (e.g. bromoxynil, ioxynil);
   - carbamates (e.g. phenmedipham);
   - urea derivatives (e.g. linuron, triflusulfuronmethyl, oxasulfuron, rimsulfuron);
   - nitro derivatives (e.g. pendimethalin, oxyfluorfen);
   - diazines (e.g. lenacil, chloridazon);
   - dipyrilidyles;
   - imidazolinones (e.g. imazetapyr, imazametabenz);
   - isoxazoles (e.g. isoxaflutole);
   - oxydiazolinones (e.g. ozadiazon);
   - pyridines (e.g. clopyralid);
   - triazines (e.g. terbuthylazine, metamitron, metribuzin);
   - triazolepyrimidine-sulphonanilides (e.g. metosulam, florasulam);
2. Organic phosphorus compounds (e.g. gliphosate, gluphosinate-ammonium).
3. Organic stannous compounds
4. Other organic compounds such as:
   - aryloxyphenoxypropionates (e.g. propaquizafop, clodinafop-propargyl, quizalofop-ethyl);
   - coumarones;
   - cyclohexanediones (e.g. sulcotrione, mesotrione);
   - cyclohexenones (e.g. cycloxydim, sethoxydim, tralkoxydim);
   - benzoic acid derivates (e.g. dicamba);
   - phenoxycarboxylic acid derivates (e.g. MCPA).
5. Inorganic Compounds

Advantageously, the water emulsion comprises a soybean oil in a percentage of 40% by weight or volume, with respect to the overall weight or volume of the emulsion.

In a preferred embodiment of the present invention, the water emulsion comprises soybean oil in a percentage of 40% by weight or volume with respect to the overall weight or volume of the emulsion. Practically, 400 g of soybean oil are mechanically emulsified in 1000 ml of water. The emulsion may further comprise: an additive such as polyethylene glycol glycerol rinoleate in an amount included between 0.5 and 2%, preferably 1%; calcium chloride in an amount included between 0.1 and 0.3%, preferably 0.2%; calcium phosphate in an amount included between 0.3 and 0.7%, preferably 0.5%; wheat flour in an amount included between 0.5 and 2%, preferably 1%; and water q.s. to 100%. Due to the nature of the active substance, i.e. soybean oil which is normally used in human feeding, the preparation is not toxic or dangerous.

The Applicant has carried out some experimental tests providing use of a fungicide composition comprising a stable water emulsion of vegetable oil, preferably soybean oil; and:
- at least one active substance selected from fungicides.

Alternatively, it is within the object of the present invention use of a (ternary) composition comprising a stable water emulsion of vegetable oil, preferably soybean oil; and:
- at least one active substance selected from fungicides; and
- at least one active substance selected from bactericides; and
- at least one active substance selected from insecticides.

In a preferred embodiment of the present invention a copper-based fungicide is employed in combination with a sulphur fungicide.

Alternatively, it is within the object of the present invention use of a (binary) combination comprising a stable water emulsion of vegetable oil, preferably soybean oil; and:
- at least one active substance selected from fungicides; and
- at least one active substance selected from bactericides.

Alternatively, it is within the object of the present invention use of a (binary) composition comprising a stable water emulsion of vegetable oil, preferably soybean oil; and:
- at least one active substance selected from fungicides; and
- at least one active substance selected from insecticides.

In the context of the present invention, for the sake of simplicity, the preparation reproduced in Example 1 will be referred to as "emulsion".

### EXAMPLE NO. 1

Preparation of a stable water emulsion comprising soybean oil in a percentage of 40% by weight or volume with respect to the overall weight or volume of the emulsion.
The experimental tests hereinafter reproduced involve use of an emulsion as per Example No. 1, in combination with the respective active substances, as reproduced in each example:

### EXAMPLE NO. 2

| | | | | | | |
|---|---|---|---|---|---|---|
| Cultivation : | | muscat vine | | | | |
| Soil : | | average admixture | | | | |
| Test target : | | fight against peronospora (*Plasmopara viticola*) | | | | |

| Thesis No. | Active Ingredients | Amounts of Active Ingredients (g or ml/ha) | No. of Interventions | Surveys on peronospora | | Action Degree |
|---|---|---|---|---|---|---|
| | | | | % infection on bunches | % spreading on bunches | |
| 1 | Untreated | - | - | 4.9 a | 9.8 a | 0 |
| 2 | Mancozeb | 1470 | 11 | 0.2 b | 0.3 b | 97.4 |
| 3 | Mancozeb + Emulsion | 490 + 280 | 11 | 0.0 b | 0.0 | 100 |

| | | | | | | |
|---|---|---|---|---|---|---|
| Statistical significance: data items followed by same letter do not differ for P=0.05 in accordance with Duncan test. | | | | | | |

### EXAMPLE NO. 3

| | | | | | | |
|---|---|---|---|---|---|---|
| Cultivation : | | muscat vine | | | | |
| Soil : | | average admixture | | | | |
| Test target : *viticola*) | | fight against peronospora (*Plasmopara* | | | | |

| Thesis No. | Active Ingredients | Amounts of Active Ingredients (g or ml/ha) | No. of Interventions | Surveys on peronospora | | Action Degree |
|---|---|---|---|---|---|---|
| | | | | % infection on bunches | % spreading on bunches | |
| 1 | Untreated | - | - | 4.9 a | 9.8 a | 0 |
| 2 | Folpet | 1200 | 11 | 0.0 b | 0.0 b | 100 |
| 3 | Mancozeb + Emulsion | 400 + 200 | 11 | 0.0 b | 0.0 b | 100 |

| | | | | | | |
|---|---|---|---|---|---|---|
| Statistical significance: data items followed by same letter do not differ for P=0.05 in accordance with Duncan test. | | | | | | |

### EXAMPLE NO. 4

| | | | | | | |
|---|---|---|---|---|---|---|
| Cultivation : | | muscat vine | | | | |
| Soil : | | average admixture | | | | |
| Test target : | | fight against peronospora (*Plasmopara viticola*) | | | | |

| Thesis No. | Active Ingredients | Amounts of Active Ingredients (g or ml/ha) | No. of Interventions | Surveys on peronospora | | Action Degree |
|---|---|---|---|---|---|---|
| | | | | % infection on bunches | % spreading on bunches | |
| 1 | Untreated | - | - | 4.9 a | 9.8 a | 0 |
| 2 | Dimethomorph | 1050 | 11 | 0.0 b | 0.0 b | 100 |
| 3 | Dimethomorph + Emulsion | 350 + 280 | 11 | 0.0 b | 0.0 b | 100 |

| | | | | | | |
|---|---|---|---|---|---|---|
| Statistical significance: data items followed by same letter do not differ for P=0.05 in accordance with Duncan test. | | | | | | |

### EXAMPLE NO. 5

| | | | | | | |
|---|---|---|---|---|---|---|
| Cultivation : | | muscat vine | | | | |
| Soil : | | average admixture | | | | |
| Test target : | | fight against peronospora (*Plasmopara viticola*) | | | | |

| Thesis No. | Active Ingredients | Amounts of Active Ingredients (g or ml/ha) | No. of Interventions | Surveys on peronospora | | Action Degree |
|---|---|---|---|---|---|---|
| | | | | % infection on bunches | % spreading on bunches | |
| 1 | Untreated | - | - | 4.9 a | 9.8 a | 0 |
| 2 | Azoxystrobin | 250 | 11 | 0.0 b | 0.0 b | 100 |
| 3 | Azoxystrobin + Emulsion | 83 + 133 | 11 | 0.0 b | 0.0 b | 100 |

| | | | | | | |
|---|---|---|---|---|---|---|
| Statistical significance: data items followed by same letter do not differ for P=0.05 in accordance with Duncan test. | | | | | | |

### EXAMPLE NO. 6

| | | | | | | |
|---|---|---|---|---|---|---|
| Cultivation : | | muscat vine | | | | |
| Soil : | | average admixture | | | | |
| Test target : | | fight against peronospora (*Plasmopara viticola*) | | | | |

| Thesis No. | Active Ingredients | Amounts of Active Ingredients (g or ml/ha) | No. of Interventions | Surveys on peronospora | | Action Degree |
|---|---|---|---|---|---|---|
| | | | | % infection on bunches | % spreading on bunches | |
| 1 | Untreated | - | - | 4.9 a | 9.8 a | 0 |
| 2 | Fosetyl-Aluminium | 960 | 11 | 0,3 b | 0,8 b | 87,2 |
| 3 | Fosetyl-Aluminium + Emulsion | 320 + 160 | 11 | 0,8 b | 1,3 b | 87,2 |

| | | | | | | |
|---|---|---|---|---|---|---|
| Statistical significance: data items followed by same letter do not differ for P=0.05 in accordance with Duncan test. | | | | | | |

### EXAMPLE NO. 7

| | | | | | | |
|---|---|---|---|---|---|---|
| Cultivation : | | muscat vine | | | | |
| Soil : | | fresh calcareous | | | | |
| Test target : | | fight against mildew (*Uncinula necator*) | | | | |

| Thesis No. | Active Ingredients | Amounts of Active Ingredients (g or ml/ha) | No. of Interventions | Surveys on mildew | | Action Degree |
|---|---|---|---|---|---|---|
| | | | | % infection on bunches | % spreading on bunches | |
| 1 | Untreated | - | - | 25.3 a | 87.3 a | 0 |
| 2 | Sulphur | 4795 | 6 | 2.2 b | 12.5 bd | 85.7 |
| 3 | Sulphur + Emulsion | 1598 + 800 | 6 | 1.5 b | 9.4 bd | 89.3 |

| | | | | | | |
|---|---|---|---|---|---|---|
| Statistical significance: data items followed by same letter do not differ for P=0.05 in accordance with Duncan test. | | | | | | |

### EXAMPLE NO. 8

| | | | | | | |
|---|---|---|---|---|---|---|
| Cultivation : | | muscat vine | | | | |
| Soil : | | average admixture | | | | |
| Test target : | | fight against acid rot | | | | |

| Thesis No. | Active Ingredients | Amounts of f.c.(g or ml/ha) | No. of Interventions | Surveys on botritis | | Action Degree |
|---|---|---|---|---|---|---|
| | | | | % infection on bunches | % spreading on bunches | |
| 1 | Untreated | - | - | 1.3 a | 40.0 a | 0 |
| 2 | (Cyprodinil +Fludioxonil) | (300 + 200) | 2 | 0.2 d | 11.5 cd | 78 |
| 3 | (Cyprodinil +Fludioxonil) + Emulsion | (101 + 68) + 108 | 2 | 0.4 bd | 21.5 bd | 86.8 |

| | | | | | | |
|---|---|---|---|---|---|---|
| Statistical significance: data items followed by same letter do not differ for P=0.05 in accordance with Duncan test. | | | | | | |

The above reproduced tests were carried out by adding the water-oil emulsion comprising soybean oil, to active substances such as: fungicides (mancozeb, folpet, dimethomorph, azoxystrobin, fosetyl-aluminium, sulphur).

All tables and related theses reproduced herein result from an experimental activity carried out in the open field following precise protocols and experimental guidelines.

The aim of this experimental activity was that of verifying the possibility of reducing the amount of the chemical formulation employed, while keeping the activity of same unchanged towards adversities to be fought (peronospora, mildew, thanks to addition of the adjuvant, soybean oil.

Therefore in each table, together with the untreated control specimen, the thesis relating to the active ingredient is reproduced to the standard amount suggested on the label (e.g. folpet to 1200 g/ha of active ingredient) and the thesis contemplating the same active ingredient to an amount reduced to 1/3 of the full amount with the water emulsion in an extemporaneous mixture (e.g. folpet 400 g/ha of active ingredient + stable water emulsion 200 ml/ha of active ingredient).

The methodologies for detection of the efficiency results were selected depending on: the pathology to be fought, infection, % spreading of the disease for peronospora, mildew and acid rot.

In order to minimize the result variability, which is outside the true behaviour of a given fight means against a certain adversity, there are standardized protocols and experimental guidelines to be applied in a precise and meticulous manner. At all events the experimental error is always present in interpreting the results of a test. Acknowledgement of such an error and therefore possible scientific validation is carried out by statistical working out of the results and data items resulting from the experimental test.

The statistical data item interpretation is essentially based on the calculation of the "variance" or the square of the standard deviation. As known, the "mean" evaluates the average value of a data item series and the "variance" on the contrary evaluates how much these data items deviates from the average of the same series.

The variance analysis leads to the evaluation of the significance of an experimental data item, in other words it leads to the evaluation of its reproducibility and its real correlation with the factor under examination.

The minimum significance must be at least equal to P = 0.05 (5%).

Example: if, based on the variance calculation, two values are evaluated significatively different from each other for P=0.05, it means that the probability that the same values will be different from each other by mere chance is 5%. Therefore, there is a 95% probability that these data items will be really different and correlated with the factors they numerically represent. In addition, should the same experimental test be repeated further 100 times under the same operating conditions, in 95 cases out of 100 the same data items would be significantly different and not by mere chance.

Among the great number of statistical tests interpreting the experimental data items, Duncan test in the scientific field is considered as one of the best evaluation instruments for significance of the experimental data items. The test allocates a letter to each number; to the same letter correspond numbers evaluated as not significantly different.
Example: 12.5 a 0.9 b 0.3 b

Although 0.9 and 0.3 are numerically different, they are evaluated, in connection with 12.5, as not significantly different from each other but both of them are evaluated as significantly different from 12.5.

Advantageously, the fungicide composition comprises a stable water emulsion of soybean oil in combination with other copper-based products.

The copper-including composition is particularly adapted for reducing fungus diseases, caused by *Phycomyces* belonging to the *peronosporaceae* family on several different cultivations. Cultivations on which the copper-including composition was tested are, for example: citrus fruit, vine, strawberry, bulb vegetables (garlic and onion), fruit vegetables (tomato, pepper, aubergine, melon, cucumber) cabbage, leaf vegetables (lettuce, spinach, beet and mangel-wurzel), fresh and pulse leguminous plants (beans and peas), potato, sugar beet, tobacco, ornamental flowers.

Advantageously, the stable water emulsion of soybean oil is employed to the same reduced amount as the copper-based preparation (from oxychloride, hydroxide, sulphate) with which it is mixed. For instance, in an amount ratio 1:1, if the amount of the cupric product corresponds to 100 ml/g/hl the water emulsion amount, with 40% soybean oil for example, is 100 ml/hl. Alternatively, if on the contrary the copper-based product is applied to 200 ml/g/hl the water emulsion amount, with 40% soybean oil for example, is 200 ml/hl.

The Applicant has surprisingly found that the reduction in the copper-based product amounts is included within 1/3 to 1/6 of the normal use amount. Practically, 300 ml/g/hl of copper formulation can be reduced from a minimum of three times (100 ml/g/hl) to a maximum of six times (50 ml/g/hl) depending on the sensibility degree of the cultivation and the disease pressure that is wished to be fought.

In addition, use of the emulsion in combination with the active ingredients does not at all modify the intervention strategy of the fungicides and/or bactericides, such as copper-based products, as provided by a good agricultural experience. The composition comprising the stable water emulsion and the active ingredient once diluted in water, is applied to the cultivations to be protected using normal spraying equipment.

As regards periods and treatment number, the instructions reproduced on the label for the corresponding products employed are to be followed.

The composition comprising the stable water emulsion and the active principle object of the present invention improves distribution and adhesive character of the active ingredient employed, enabling reduction in the amounts of use of the fungicide, bactericide, insecticide and herbicide. For instance, with reference to copper, it was noticed that, at the "time of lack" (20 days from application of the stable water emulsion-copper formulation mixture), the copper residue does not overcome the maximum residue admitted on treated fruits/leaves. In this connection, the following tests carried out on grapes and must are herein reproduced (Table 1).

**Table 1 - Copper residues in grapes and must samples**

| PRODUCT | Comm.Formulation amount | Number of applications | Copper (mg/kg or 1) | |
|---|---|---|---|---|
| | | | Grapes | Must |
| 40% copper hydroxide | 1800 | 6 | 11.70 | 1.05 |
| 40% copper hydroxide + emulsion | 600 + 600 | 6 | 4.60 | 0.26 |

The maximum copper residue allowed in grapes and in tomato corresponds to 20 ing per kg of product, whereas in the must it corresponds to 1 mg per kg or litre of product.

Tests show that, at "the time of lack" the copper values are under the limits established by law.

The Applicant has carried out some experimental tests using the water emulsion object of the present invention in a mixture with some copper formulations. The tests aimed at evaluating, on the one hand, the efficiency of a composition comprising a water emulsion of soybean oil admixed with some copper products and, on the other hand, the efficiency of the copper products employed by their own. The tests carried out were the following:
1) Efficiency evaluation when admixed with copper oxychloride and cupric hydroxide for peronospora (*Phytophthoraa infestans*) control on tomato (Table 2);
2) Efficiency evaluation when admixed with copper oxychloride and cupric hydroxide for peronospora (*Plasmopara viticola*) control on vine (Table 3);
3) Efficiency of the soybean-oil water emulsion admixed with copper formulations for peronospora (*Phytophthoraa infestans*) control on tomato (Table 4);
4) Efficiency of the soybean-oil water emulsion admixed with cupric hydroxide and cupric sulphate for peronospora (*Plasmopara viticola*) control on vine (Table 5);
5) Efficiency of the soybean-oil water emulsion admixed with cupric hydroxide and cupric sulphate for peronospora (*Plasmopara viticola*) control on vine (Table 6).

**Table 2 Phytophthora infestans on tomato**

| No. | Product | Amount (g/hl) | | % infected surface per plant on 25 plants per parcel of land | | Fruit infection on 25 plants per parcel of land on harvesting (06/09) | |
|---|---|---|---|---|---|---|---|
| | | f.c. | p.a. | 01/09/99 | 09/09/99 | % infected fruits/ plant | % plants with infected fruits |
| 1 | Untreated | - | - | 36.1 a | 85.8 a | 6.9 a | 100 a |
| 2 | 50% copper oxychloride + emulsion | 200 + 200 | 100 + 80 | 11.0 bcd | 22.2 c | 1.7 b | 44.0 c |
| 3 | 50% copper oxychloride + emulsion | 100 + 100 | 50 + 40 | 10.9 bcd | 28.9 b | 1.9 b | 60.0 b |
| 4 | 50% copper oxychloride + emulsion | 50 + 50 | 25 + 20 | 12.1 bc | 30.0 b | 2.2 b | 56.0 b |
| 5 | 50% copper oxychloride | 300 | 150 | 12.9 b | 19.5 c | 0.8 cd | 25.0 ef |
| 6 | 40% cupric hydroxide + emulsion | 250 + 250 | 100 + 100 | 7.0 e | 9.2 d | 0.4 de | 18.0 fg |
| 7 | 40% cupric hydroxide + emulsion | 200 + 200 | 50 + 50 | 9.2 cde | 15.8 cd | 0.8 cd | 32.0 de |
| 8 | 40% cupric hydroxide + emulsion | 100 +100 | 25 + 25 | 9.3 cde | 16.0 cd | 1.1 c | 39.0 cd |
| 9 | 40% cupric hydroxide | 300 | 120 | 8.3 de | 11.4 d | 0.2 e | 13.0 g |

| | | | | | | | |
|---|---|---|---|---|---|---|---|
| Data items followed by same letter do not differ for P=0.05 according to Duncan test | | | | | | | |

**Table 3 Plasmopara viticola on vine**

| No. | Product | Amount (g/hl) | | % infected leaf surface on 100 leaves per parcel of land | | % infected leaves on 100 leaves per parcel of land | |
|---|---|---|---|---|---|---|---|
| | | f.c. | p.a. | 12/08/99 | 23/08/99 | 12/08/99 | 23/08/99 |
| 1 | Untreated | - | - | 15.1 a | 22.7 a | 58.8 a | 67.3 a |
| 2 | 50% copper oxychloride + emulsion | 200 + 200 | 100 + 80 | 3.6 bc | 3.9 b | 25.5 bc | 26.0 b |
| 3 | 50% copper oxychloride + emulsion | 100 + 100 | 50 + 40 | 3.8 bc | 6.3 b | 26.3 bc | 35.3 b |
| 4 | 50% copper oxychloride + emulsion | 50 + 50 | 25 + 20 | 5.3 bc | 6.3 b | 32.3 b | 35.0 b |
| 5 | 50% copper oxychloride | 300 | 150 | 3.0 c | 5.5 b | 23.3 bc | 31.3 b |
| 6 | 40% cupric hydroxide + emulsion | 250 + 250 | 100 + 100 | 2.2 c | 3.1 b | 19.8 c | 23.5 b |
| 7 | 40% cupric hydroxide + emulsion | 200 + 200 | 50 + 50 | 3.7 bc | 4.2 b | 27.5 bc | 29.0 b |
| 8 | 40% cupric hydroxide + emulsion | 100 + 100 | 25 + 25 | 6.3 b | 6.6 b | 33.3 b | 30.3 b |
| 9 | 40% cupric hydroxide | 300 | 120 | 2.5 c | 4.9 b | 23.0 bc | 32.8 b |

| | | | | | | | |
|---|---|---|---|---|---|---|---|
| Data items followed by same letter do not differ for P=0.05 according to Duncan test | | | | | | | |

**Table 4 Phytophthora infestans on tomato**

| No. | Product | Amount (g/hl) | | % infected surface per plant on 25 plants per parcel of land | | Fruit infection on 25 plants per parcel of land on harvesting (11/09) | |
|---|---|---|---|---|---|---|---|
| | | f.c. | p.a. | 04/09/00 | 12/09/00 | % infected fruits/ plant | % plants with infected fruits |
| 1 | Untreated | - | - | 42.3 a | 62.8 a | 1.8 a | 53.0 a |
| 2 | 50% copper oxychloride + emulsion | 100 + 100 | 50 + 40 | 11.9 b | 24.9 b | 0 b | 0 b |
| 3 | 50% copper oxychloride + emulsion | 50 + 50 | 25 + 20 | 11.6 b | 23.9 b | 0 b | 0 b |
| 4 | 50% copper oxychloride | 300 | 150 | 10.9 b | 21.0 b | 0 b | 0 b |
| 5 | 40% cupric hydroxide * emulsion | 100 + 100 | 40 + 40 | 10.9 b | 22.6 b | 0 b | 0 b |
| 6 | 40% cupric hydroxide + emulsion | 50 + 50 | 20 + 20 | 9.5 b | 19.7 b | 0 b | 0 b |
| 7 | 40% cupric hydroxide | 300 | 120 | 8.3 b | 18.8 b | 0 b | 0 b |
| 8 | 20.2% cupric sulphate + emulsion | 340 + 340 | 68.68+136 | 8.6 b | 19.7 b | 0 b | 0 b |
| 9 | 20.2% cupric sulphate + emulsion | 170 + 170 | 34.34+68 | 8.9 b | 19.2 b | 0 b | 0 b |
| 10 | 20.2% Cupric sulphate | 1000 | 202 | 13.8 b | 22.4 b | 0.1 b | 3.0 b |

| | | | | | | | |
|---|---|---|---|---|---|---|---|
| Data items followed by same letter do not differ for P=0.05 according to Duncan test | | | | | | | |

**Table 5 Plasmopara viticola on vine**

| No. | Product | Amount (g/hl) | | % infected leaf surface on 100 leaves per parcel of land | | % infected leaves on 100 leaves per parcel of land | |
|---|---|---|---|---|---|---|---|
| | | f.c. | p.a. | 11/08/00 | 21/08/00 | 11/08/00 | 21/08/00 |
| 1 | Untreated | - | - | 4.1 a | 14.3 a | 27.8 a | 58.3 a |
| 2 | 40% cupric hydroxide + emulsion | 100 + 100 | 40 + 40 | 0.6 b | 3.6 b | 8.0 bc | 21.5 bc |
| 3 | 40% cupric hydroxide + emulsion | 50 + 50 | 20 + 20 | 0.7 b | 3.2 b | 9.3 b | 23.8 b |
| 4 | 40% cupric hydroxide | 300 | 120 | 0.3 b | 3.0 b | 4.8 d | 22.0 bc |
| 5 | 20.2% cupric sulphate + emulsion | 340 + 340 | 68.68+136 | 0.3 b | 2.6 b | 4.3 d | 19.5 c |
| 6 | 20.2% cupric sulphate + emulsion | 170 + 170 | 34.34+68 | 0.4 b | 3.4 b | 6.0 cd | 24.0 b |
| 7 | 20.2% cupric sulphate | 1000 | 202 | 0.3 b | 2.5 b | 4.0 d | 19.5 c |

| | | | | | | | |
|---|---|---|---|---|---|---|---|
| Data items followed by same letter do not differ for P=0.05 according to Duncan test | | | | | | | |

**Table 6 Plasmopara viticola on vine**

| No. | Product | Amount (g/hl) | | % infected leaf surface on 100 leaves per parcel of land | | % infected leaves on 100 leaves per parcel of land | |
|---|---|---|---|---|---|---|---|
| | | f.c. | p.a. | 02/08/00 | 11/08/00 | 02/08/00 | 11/08/00 |
| 1 | Untreated | - | - | 6.3 a | 12.3 a | 12.3 a | 67.3 a |
| 2 | 50% copper oxychloride + emulsion | 170 + 170 | 85 + 68 | 0.2 b | 0.3 b | 0.3 b | 5.3 b |
| 3 | 50% copper oxychloride + emulsion | 85 + 85 | 42.5 + 34 | 0.3 b | 0.3 b | 0.3 b | 5.0 b |
| 4 | 50% copper oxychloride | 500 | 250 | 0.1 b | 0.2 b | 0.2 b | 4.0 b |
| 5 | 20.2% cupric sulphate + emulsion | 400 + 400 | 80.8 + 160 | 0.2 b | 0.3 b | 0.3 b | 4.8 b |
| 6 | 20.2% cupric sulphate + emulsion | 200 + 200 | 40.4 + 80 | 0.2 b | 0.3 b | 0.3 b | 5.5 b |
| 7 | 20.2% cupric sulphate | 1200 | 242.5 | 0.1 b | 0.2 b | 0.2 b | 3.3 b |

| | | | | | | | |
|---|---|---|---|---|---|---|---|
| Data items followed by same letter do not differ for P=0.05 according to Duncan test | | | | | | | |

In the context of the present invention, by (f.c.) it is intended "commercial formulation" and by (p.a.) it is intended "active ingredient".

The water emulsion object of the invention has a high physical and chemical compatibility with products for plant protection. The emulsion is compatible with preparations based on copper oxychloride, cupric hydroxide, oxide (or copper oxide) and sulphate.

The product improves wettability, adhesion and distribution of the cupric preparations to which it is to be added.

In a preferred embodiment of the present invention, the application method comprises the following steps:
- preparing a stable water emulsion comprising soybean oil;
- admixing the active ingredient, a copper formulation for example, with said emulsion to obtain a mixture;
- applying said mixture to cultivations to be treated by use of spraying means.

The water emulsion comprising a vegetable oil (soybean oil) is fully degradable. Therefore, as to possible phythotoxic effects on cultivations, and precautionary measures to avoid such effects, instructions for use of the active ingredients employed or the copper products admixed with said emulsion are to be followed.

## Claims

1. Use of a stable water emulsion comprising water in an amount included between 15 and 85% by weight or volume, with respect to the overall weight or volume of the emulsion, and a soybean oil in an amount included between 85 and 15% by weight or volume, with respect to the overall weight or volume of the emulsion as an adjuvant for substances having a fungicide activity in preventive or curative treatments of diseases caused by fungi on agricultural cultivations.

2. Use as claimed in claim 1, wherein said emulsion comprises a soybean oil in a percentage of 40% by weight or volume, with respect to the overall weight or volume of the emulsion.

3. Use as claimed in claim 1 or 2, wherein fungus selection is made from the group comprising: *Pythium spp.; Phyphthora spp. ; Peronospora spp. ; Bremia spp. ; Uncinula necator; Sclerotinia spp.; Venturia inequalis; Cercospora spp.; Alternaria spp.; Thielaviopsis spp.; Cladosporium spp.*; *Botritis spp*.; *Monilia spp.*; *Verticillium spp..*

4. Use as claimed in claim 1 or 2, wherein the cultivations submitted to treatment are selected from the group comprising: horticultural cultivations, tomato, potato, lettuce, strawberry, onion, celery, melon, marrow, aubergine, artichoke, French bean, cabbage; flower and ornamental cultivations, rhododendron, begonia, camellia, chrysantemum, carnation, stork's bill, gerbera, lilium, orchid, petunia, primula, rose; arboreous cultivations, dicotyledon, citrus, cherry, fig, almond, apple, walnut, olive, pear, peach, plum trees, vine, flower and ornamental trees.

5. A fungicide composition consisting of:
- a stable water emulsion of a soybean oil; and
- at least one substance having a fungicide activity,
**characterized in that** said emulsion consists of water in an amount included between 15 and 85% by weight or volume, with respect to the overall weight or volume of the emulsion, and a soybean oil in an amount included between 85 and 15% by weight or volume, with respect to the overall weight or volume of the emulsion.

6. A composition as claimed in claim 7, wherein said emulsion consists of a soybean oil in a percentage of 40% by weight or volume, with respect to the overall weight or volume of the emulsion.

7. A composition as claimed in claim 5 or 6, wherein fungus selection is made from the group comprising: *Pythium spp.*; *Phyphthora spp.*; *Peronospora spp.*; *Bremia spp.*; *Uncinula necator; Sclerotinia spp.; Venturia inequalis; Cercospora spp.; Alternaria spp.; Thielaviopsis spp.; Cladosporium spp. ; Botritis spp. ; Monilia spp. ; Verticillium spp..*

8. A composition as claimed in claim 5 or 6, wherein the cultivations submitted to treatment are selected from the group comprising: horticultural cultivations, tomato, potato, lettuce, strawberry, onion, celery, melon, marrow, aubergine, artichoke, French bean; cabbage; flower and ornamental cultivations, rhododendron, begonia, camellia, chrysantemum, carnation, stork's bill, gerbera, lilium, orchid, petunia, primula, rose; arboreous cultivations, dicotyledon, citrus, cherry, fig, almond, apple, walnut, olive, pear, peach, plum trees, vine, flower and ornamental trees.

9. A composition as claimed in anyone claims 5-8, wherein the substance having a fungicide activity is a copper-based preparation.

10. A composition as claimed in claim 9, wherein said copper is selected from copper oxychloride, copper hydroxide, copper sulphate.

11. A composition as claimed in anyone claims 5-8, wherein the substance having a fungicide activity is selected from the group comprising of:
organic nitrogen-sulphur compounds, preferably dithiocarbamates, ziram, mancozeb; thiazines; thiadizoles; thioanilides, preferably etridiazole; thiocyanoquinones; thiophanates; thiophthalimides, preferably folpet.

12. A composition as claimed in anyone claims 5-8, wherein the substance having a fungicide activity is selected from the group comprising of:
organic nitrogen compounds, preferably organic aromatic-aliphatic nitrogen compounds, preferably cymoxanil, benalaxyl, metalaxyl, chlorothalonil); organic heterocyclic nitrogen compounds, preferably procymidone, fludioxonil, cyprodinil; bitertanol, tetraconazole, triadimenol, dimethomorph.

13. A composition as claimed in anyone claims 5-B, wherein the substance having a fungicide activity is selected from the group comprising of:
halohydrocarbons; analogues of strobilurines, preferably azoxystrobin; trifloxystrobin); organic phosphorus compounds, preferably fosetyl-aluminium, organic stannous compounds; inorganic compounds, preferably sulphur and compounts thereof, preferably sulphur.

## Patentansprüche

1. Benutzung von einer stabilen wässrigen Emulsion umfassend Wasser in einer Menge von 15 bis 85 Gew.-% oder Vol.-%, bezogen auf das Gesamtgewicht oder - volumen der Emulsion, und ein Sojabohnenöl in einer Menge von 85 bis 15 Gew.-% oder Vol.-%, bezogen auf das Gesamtgewicht oder -volumen der Emulsion, als Adjuvant für Substanzen mit einer fungiziden Aktivität bei Präventiv- oder Heilbehandlungen von durch Pilze hervorgerufenen Erkränkungen bei Anbauten.

2. Benutzung nach Anspruch 1, worin die Emulsion ein Sojabohnenöl in einem Prozentanteil von 40% Gew.-% oder Vol.-%, bezogen auf das Gesamtgewicht oder - volumen der Emulsion, umfasst.

3. Benutzung nach Anspruch 1 oder 2, worin die Pilzwahl aus der Gruppe umfassend: *Pythium spp.; Phyphthora spp.; Peronospora spp.; Bremia spp.; Uncinula necator; Sclerotinia spp.; Venturia inequalis; Cercospora spp. ; Alternaria spp. ; Thielaviopsis spp. ; Cladosporium spp.; Botritis spp.; Monilia spp.; Verticillium spp.,* erfolgt.

4. Benutzung nach Anspruch 1 oder 2, worin die der Behandlung unterzogenen Anbauten aus der Gruppe umfassend: Gemüseanbauten, Tomate, Kartoffel, Kopfsalat, Erdbeere, Zwiebel, Sellerie, Melone, Kürbis, Aubergine, Artischocke, grüne Bohne, Kohl; Blumen- und Zieranbauten, Rhododendron, Begonie, Kamelie, Chrysantheme, Nelke, Geranie, Gerbera, Lilie, Orchidee, Petunie, Primel, Rose; Baumanbauten, Dikotyle, Zitruspflanzen, Kirsch-, Feigen-, Mandel-, Apfel-, Walnuss-, Oliven-, Birnen-, Pfirsich-, Pflaumenbäume, Weinrebe, Blumen- und Zierbäume, ausgewählt werden.

5. Fungizide Zusammensetzung bestehend aus:
- einer stabilen wässrigen Emulsion eines Sojabohnenöls;; und
- mindestens einer Substanz mit einer fungiziden Aktivität,
**dadurch gekennzeichnet, daß** die Emulsion aus Wasser in einer Menge von 15 bis 85 Gew.-% oder Vol.-%, bezogen auf das Gesamtgewicht oder -volumen der Emulsion, und aus einem Sojabohnenöl in einer Menge von 85 bis 15 Gew.-% oder Vol.-%, bezogen auf das Gesamtgewicht oder -volumen der Emulsion, besteht.

6. Zusammensetzung nach Anspruch 5, worin die Emulsion aus einem Sojabohnenöl in einer Menge von 40 Gew.-% oder Vol.-%, bezogen auf das Gesamtgewicht oder - volumen der Emulsion.

7. Zusammensetzung nach Anspruch 5 oder 6, worin die Pilzwahl aus der Gruppe umfassend: *Pythium spp.; Phyphthora spp.; Peronospora spp. ; Bremia spp. ; Uncinula necator; Sclerotinia spp.; Venturia inequalis; Cercospora spp.; Alternaria spp.; Thielaviopsis spp.; Cladosporium spp.; Botritis spp.; Monilia spp.; Verticillium spp.,* erfolgt.

8. Zusammensetzung nach Anspruch 5 oder 6, worin die der Behandlung unterzogenen Anbauten aus der Gruppe umfassend: Gemüseanbauten, Tomate, Kartoffel, Kopfsalat, Erdbeere, Zwiebel, Sellerie, Melone, Kürbis, Aubergine, Artischocke, grüne Bohne, Kohl; Blumen- und Zieranbauten, Rhododendron, Begonie, Kamelie, Chrysantheme, Nelke, Geranie, Gerbera, Lilie, Orchidee, Petunie, Primel, Rose; Baumanbauten, Dikotyle, Zitruspflanzen, Kirsch-, Feigen-, Mandel-, Apfel-, Walnuss-, Oliven-, Birnen-, Pfirsich-, Pflaumenbäume, Weinrebe, Blumen- und Zierbäume, ausgewählt werden.

9. Zusammensetzung nach irgendeinem der Ansprüche 5-8, worin die Substanz mit einer fungiziden Aktivität eine Vorbereitung auf Basis von Kupfer ist.

10. Zusammensetzung nach Anspruch 9, worin das Kupfer aus Kupferoxychlorid, Kupferhydroxid, Kupfersulfat ausgewählt wird.

11. Zusammensetzung nach irgendeinem der Ansprüche 5-8, worin die Substanz mit einer fungiziden Aktivität aus der Gruppe umfassend:
stickstoff- oder schwefelorganische Verbindungen, bevorzugt Dithiocarbamate, Ziram, Mancozeb; Thiazine; Thiadizole; Thioanilide, bevorzugt Etridiazol; Thiocyanoquinone; Thiophanate; Thiophthalimide, bevorzugt Folpet, ausgewählt wird.

12. Zusammensetzung nach irgendeinem der Ansprüche 5-8, worin die Substanz mit einer fungiziden Aktivität aus der Gruppe umfassend:
stickstofforganische Verbindungen, bevorzugt aromatische-aliphatische stickstofforganische Verbindungen, bevorzugt Cymoxanil, Benalaxyl, Metalaxyl, Chlorothalonil; heterozyklische stickstofforganische Verbindungen, bevorzugt Procymidon, Fludioxonil, Cyprodinil; Bitertanol, Tetraconazol, Triadimenol, Dimethomorph, ausgewählt wird.

13. Zusammensetzung nach irgendeinem der Ansprüche 5-8, worin die Substanz mit einer fungiziden Aktivität aus der Gruppe umfassend:
Halogenkohlenwasserstoffe; Analoge von Strobilurinen, bevorzugt Azoxystrobin; Trifloxystrobin; phosphororganische Verbindungen, bevorzugt Fosetyl-Aluminium; zinnorganische Verbindungen; anorganische Verbindungen, bevorzugt Schwefel und deren Verbindungen, bevorzugt Schwefel, ausgewählt wird.

## Revendications

1. Utilisation d'une émulsion aqueuse stable comprenant de l'eau dans une quantité comprise entre 15 et 85% en poids ou volume, par rapport au poids ou volume total de l'émulsion, et un huile de soja dans une quantité comprise entre 85 et 15% en poids ou volume, par rapport au poids ou volume total de l'émulsion, en tant qu'adjuvant de substances ayant une activité fongicide dans des traitements préventifs ou curatifs de maladies causées par des fongus dans des cultures agricoles.

2. Utilisation selon la revendication 1, où ladite émulsion comprend un huile de soja dans un pourcentage de 40% en poids ou volume, par rapport au poids ou volume total de l'émulsion.

3. Utilisation selon la revendication 1 ou 2, où les fongus sont choisis du groupe comprenant: *Pythium spp.; Phyphthora spp.; Peronospora spp.; Bremia spp.; Uncin ula necator; Sclerotinia spp.; Venturia inequalis; Cercospora spp.; Alternaria spp.; Thielaviopsis spp.; Cladosporium spp.; Botritis spp.; Monilia spp.; Verticillium spp..*

4. Utilisation selon la revendication 1 ou 2, où les cultures soumises au traitement sont choisies du groupe comprenant: cultures horticoles, tomate, pomme de terre, laitue, fraise, oignon, céleri, melon, courge, aubergine, artichaut, haricot vert, chou; cultures floricoles et ornementales, rhododendron, bégonia, camélia, chrysanthème, oeillet, géranium, gerbera, lis, orchidée, pétunia, primevère, rose; cultures àrboricoles, dicotylédone, agrumes, cerisiers, figuiers, amandiers, pommiers, noyers, oliviers, poiriers, pêchers, pruniers, vignes, arbres à fleurs et d'ornement.

5. Composition fongicide se composant de:
- une émulsion aqueuse stable d'un huile de soja; et
- au moins une substance ayant une activité fongicide,
**caractérisée en ce que** ladite émulsion se compose d'eau dans une quantité comprise entre 15 et 85% en poids ou volume, par rapport au poids ou volume total de l'émulsion, et d'un huile de soja dans une quantité comprise entre 85 et 15% en poids ou volume, par rapport au poids ou volume total de l'émulsion.

6. Composition selon la revendication 5, où ladite émulsion se compose d'un huile de soja dans un pourcentage de 40% en poids ou volume, par rapport au poids ou volume total de l'émulsion.

7. Composition selon la revendication 5 ou 6, où les fongus sont choisis du groupe comprenant: *Pythium spp. ; Phyphthora spp. ; Peronospora spp. ; Bremia spp.; Uncinula necator; Sclerotinia spp. ; Venturia inequalis; Cercospora spp.; Alternaria spp.; Thielaviopsis spp.; Cladosporium spp.; Botritis spp.; Monilia spp.; Verticillium spp..*

8. Composition selon la revendication 5 ou 6, où les cultures soumises au traitement sont choisies du groupe comprenant: cultures horticoles, tomate, pomme de terre, laitue, fraise, oignon, céleri, melon, courge, aubergine, artichaut, haricot vert, chou; cultures floricoles et ornementales, rhododendron, bégonia, camélia, chrysanthème, oeillet, géranium, gerbera, lis, orchidée, pétunia, primevère, rose; cultures arboricoles, dicotylédone, agrumes, cerisiers, figuiers, amandiers, pommiers, noyers, oliviers, poiriers, pêchers, pruniers, vignes, arbres à fleurs et d'ornement.

9. Composition selon l'une quelconque des revendications 5-8, où la substance ayant une activité fongicide est une préparation à base de cuivre.

10. Composition selon la revendication 9, où ledit cuivre est choisi parmi oxychlorure de cuivre, hydroxyde de cuivre, sulfate de cuivre.

11. Composition selon l'une quelconque des revendications 5-8, où la substance ayant une activité fongicide est choisie du groupe comprenant:
composés organiques azotés-soufrés, de préférence dithiocarbamates, ziram, mancozeb; thiazines; thiadizoles; thioanilides, de préférence étridiazole; thiocyanoquinones; thiophanates; thiophthalimides, de préférence folpet.

12. Composition selon l'une quelconque des revendications 5-8, où la substance ayant une activité fongicide est choisie du groupe comprenant:
composés organiques azotés, de préférence composés organiques azotés aromatiques-aliphatiques, de préférence cymoxanil, benalaxyl, metalaxyl, chlorothalonil; composés organiques azotés hétérocycliques, de préférence procymidone, fludioxonil, cyprodinil; bitertanol, tetraconazole, triadimenol, dimethomorph.

13. Composition selon l'une quelconque des revendications 5-8, où la substance ayant une activité fongicide est choisie du groupe comprenant:
hydrocarbures halogénés; analogues de strobilurines, de préférence azoxystrobine, trifloxystrobine; composés organiques phosphorés, de préférence fosétyl-aluminium; composés organiques stanneux; composés inorganiques, de préférence soufre et ses composés, de préférence soufre.
